(19) Europäisches Patentamt
European Patent Office
Office européen des brevets

(11) Veröffentlichungsnummer: **0 450 534 A1**

(12) # EUROPÄISCHE PATENTANMELDUNG

(21) Anmeldenummer: **91105083.9**

(51) Int. Cl.5: **B66F 9/07**, B65G 1/04

(22) Anmeldetag: **28.03.91**

(30) Priorität: **04.04.90 DE 4010905**

(43) Veröffentlichungstag der Anmeldung: **09.10.91 Patentblatt 91/41**

(84) Benannte Vertragsstaaten: **CH DE FR GB IT LI**

(71) Anmelder: **Gustav Wagner Maschinenfabrik GmbH & Co. KG**
**Opfersteinstrasse 11**
**W-7410 Reutlingen 1(DE)**

(72) Erfinder: **Ritter, Siegfried**
**Schellingstrasse 41**
**W-7410 Reutlingen(DE)**

(74) Vertreter: **Popp, Eugen, Dr. et al**
**MEISSNER, BOLTE & PARTNER Postfach 86 06 24**
**W-8000 München 86(DE)**

(54) **Regalbediengerät nach Art eines Kranes für ein Lager für stabförmiges Material.**

(57) Regalbediengerät nach Art eines Kranes für ein Lager für Stangenmaterial oder dieses enthaltende Langgutkassetten mit quer zur Lagerraumrichtung (12) angeordneten und in Lagerraumrichtung miteinander fluchtenden Stabelgestellen (1, 2), die regalartig bzw. unter Ausbildung von übereinander angeordneten Regalfächern (5, 6) mit nebeneinander liegenden Reihen übereinander angeordneter, sich in Lagerraumrichtung erstreckender, an vertikalen Stützen (11) befestigter Tragarme (3, 4) für das Stangenmaterial (7) oder die Langgutkassetten versehen sind. Der Kran weist eine oberhalb der Stapelgestelle (1, 2) in Lagerraumrichtung (12) horizontal verfahrbare, sich quer zur Lagerraumrichtung erstreckende Kranbrücke (9) auf, die eine im Bereich eines jeden Regalgangs (16) vertikal auf- und abbewegbare Trageinheit (14) umfaßt, an der diametral gerichtete, jeweils auf die Stapelgestelle (1, 2) weisende Tragmittel (18, 19) angeordnet sind. Innerhalb der Kranbrücke (9) ist ein Umsetzplatz (10) für das Stangenmaterial (7) angeordnet, der für die diametral gerichteten Tragmittel (18, 19) der Trageinheit (14) von beiden Seiten her zugänglich ist. Die Tragmittel (18, 19) sind an der Kranbrücke (9) auch noch in Lagerraumrichtung hin- und herverfahrbar gelagert (Doppelpfeil 23), insbesondere auch innerhalb der Kranbrücke oberhalb der Stapelgestelle (1, 2).

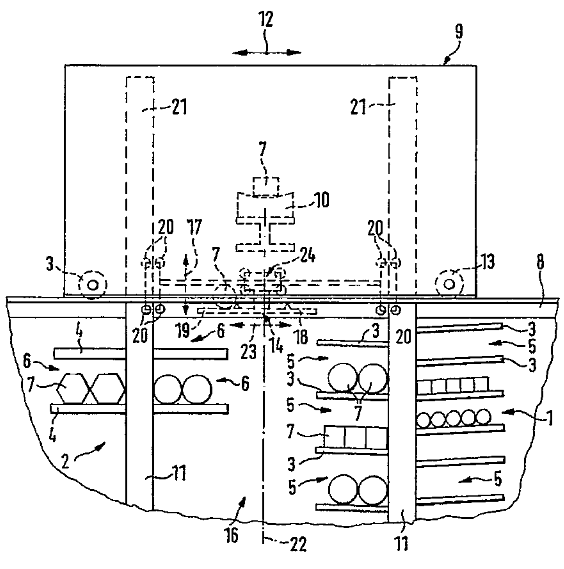

FIG.1

EP 0 450 534 A1

Die Erfindung betrifft ein Regalbediengerät nach Art eines Kranes für ein Lager für stabförmiges Material wie Rohre oder Stangen bzw. solches Material enthaltende Langgutkassetten, gemäß dem Oberbegriff des Anspruches 1.

Bei einem bekannten Lager für stabförmiges Material (vgl. DE-PS 36 02 201, DE-OS 34 33 736) sind die Regalfächer beidseits jedes Regalganges angeordnet, und es können entsprechend ausgehend von der durch den Regalgang gebildeten Mittelposition die Tragmittel zur Seite hin verfahren werden, um das stabförmige Material aus den Regalfächern aufzunehmen und es horizontal in den Regalgang zu befördern, von wo aus dann das stabförmige Material durch Vertikalbewegung der der Kranbrücke des Regalbediengerätes zugeordneten Trageinheit weitertransportiert werden kann. Soll das stabförmige Material aus dem jeweiligen Regalgang heraus gebracht werden, so wird es durch entsprechende Hubbewegung der Trageinheit auf eine Position innerhalb der Kranbrücke gebracht so daß es über Kopf des Regallagers in Lagerraumrichtung verfahren werden kann. In der Regel erstreckt sich die Kranbrücke quer zur Lagerraumrichtung über die gesamte Lagerbreite. Die Trageinheit ist mit in Lagerraumrichtung vorstehenden Gabelzinken zur Materialaufnahme versehen und in dem jeweiligen Regalgang vertikal bis zum gewünschten Regalfach bewegbar.

Bei einem gattungsgemäßen bekannten Regalbediengerät, (vgl. DE-PS 36 02 201, DE-OS 34 33 736), das anhand von Fig. 5 schematisch dargestellt ist, ist im Lager zusätzlich noch ein stationär angeordneter Umsetzplatz vorgesehen, welcher in Fig. 5 mit der Bezugsziffer 10 gekennzeichnet ist. Der Umsetzplatz ist am oberen Ende einer sich quer zur Lagerraumrichtung erstreckenden Reihe von vertikalen Stützen 11 befestigt. Im übrigen kennzeichnen in Fig. 5 die Bezugsziffern 1 und 2 den oberen Ausschnitt von zwei in Raumrichtung hintereinander angeordneten Stapelgestellen, und die Bezugsziffern 3 und 4 an den vertikalen Stützen 11 angeordnete, sich jeweils in Lagerraumrichtung erstreckende Tragarme. Die Stapelgestelle 1 und 2 sind in Richtung der Zeichenebene gemäß Fig. 5, die der Lagerraumrichtung entspricht, in beliebiger Zahl fluchtend nebeneinander angeordnet und erstrecken sich senkrecht zur Zeichenebene gemäß Fig. 5 und damit quer zur Lagerraumrichtung, wobei ihre Ausdehnung nach unten beliebig entsprechend den jeweiligen räumlichen Verhältnissen ist.

Auf die durch die Tragarme 3 bzw. 4 gebildeten Regalfächer 5 bzw. 6 der Stapelgestelle 3, 4 ist stabförmiges Material 7 gelegt, wozu bezüglich jedes Faches eines Regals bzw. Stapelgestells mehrere Tragarme 3 bzw. 4 hintereinander gegebenenfalls auch mit unterschiedlichen Abständen angeordnet sind, um unterschiedliche Längen des stabförmigen Materials 7 tragen zu können, wie sie sich beispielsweise auch bei der Rücklagerung von nach der Bearbeitung verbliebenen Reststücken ergeben.

An der Oberseite tragen die Stapelgestelle 1, 2 ein Paar sich in Lagerraumrichtung erstreckender Schienen 8, auf denen ein Regalbediengerät nach Art eines Kranes mit einer insgesamt mit 9 bezeichnete Kranbrücke verfahrbar ist. Die Verfahrrichtung der Kranbrücke 9 ist mit der Bezugsziffer 12 (Dcppelpfeil) angedeutet. Die Kranbrücke 9 besteht im wesentlichen aus einem durch Längsträger, Querträger und vertikalen Stützen gebildeten Rahmen. An den Längsträgern sind Räder 13 drehbar, die teilweise durch Fahrmotoren angetrieben werden und mit denen die Kranbrücke 9 auf den Schienen 8 hin- und herverfahrbar ist. Außerdem sind auf den Längsträgern nichtdargestellte Puffer zur Wegbegrenzung am Lagerende befestigt. Auf dem so beschriebenen Rahmen der Kranbrücke 9 ist ein ebenfalls nicht dargestellter Hubmotor befestigt, mittels dem eine Trageinheit 14 mit diametral angeordneten und sich jeweils in Lagerraumrichtung erstreckenden Tragmitteln in Form von Gabelzinken A, B, vertikal auf- und abbewegbar ist.

Soll nun in einem in Fig. 5 nach links offenen Regalfach 5 abgelegtes stabförmiges Material 7 (Materialstangen) mittels der Trageinheit 14 zu einer nur von rechts her zugänglichen Schnellwechselstation 15 transportiert werden, muß eine Materialstange zunächst von den gabelzinkenartigen Tragmitteln A der Trageinheit 14 unterfahren und angehoben sowie gemäß Pfeil $A_1$ zur Regalgang-Mitte bewegt werden. Anschließend erfolgt in Richtung des Pfeiles $A_2$ eine Hubbewegung in die Kranbrücke 9 hinein. Dann wird die Materialstange längs des Pfeiles $A_3$ in eine Position oberhalb des vorerwähnten Umsetzplatzes 10 verfahren, und zwar durch entsprechende Horizontalbewegung der gesamten Kranbrücke 9 in Fig. 5 nach rechts. Auch die Horizontalbewegung in Richtung des Pfeiles $A_1$ erfolgt durch Verfahren der Kranbrücke 9 nach links. Anschließend wird die Materialstange auf dem Umsetzplatz 10 abgelegt. Die Tragmittel A werden daraufhin unter der abgelegten Materialstange herausgefahren und innerhalb der Kranbrükke 9 angehoben. Anschließend wird die Kranbrücke 9 einschließlich Trageinheit 14 über die abgelegte Materialstange hinweggefahren, und zwar in Fig. 5 nach rechts. Dann wird die Trageinheit 14 wieder abgesenkt und nach links verfahren, so daß die Tragmittel B der Trageinheit 14 die Materialstange untergreifen. Anschließend wird die Trageinheit 14 innerhalb der Kranbrücke 9 angehoben und samt der Kranbrücke 9 nach links in die Regalgang-Mittel zurückverfahren, und zwar gemäß den Pfeilen $B_1$ und $B_2$. Dann erfolgt eine Absenkung der Trageinheit 14 in Richtung des Pfeiles $B_3$ bis auf Höhe der Schnellwechselstation 15.Dann erfolgt eine Bewegung der Kranbrücke 9 samt Trageinheit 14 nach links in Richtung des Pfeiles $B_4$ in die Materialstangen-Übergabeposition im Bereich der Schnellwechselstation 15. Die Pfeile $A_1$ bis $A_4$ deuten die Bewegung der gabelzinkenartigen Tragmittel A vom Entnahmefach 5 bis zum Umsetzplatz 10 an, während die Pfeile $B_1$ bis $B_4$ der Bewegung der Tragmittel B vom Umsetzplatz 10 bis zur Schnellwechselstation 15 entsprechen.

Die vorgenannte Beschreibung des gattungsgemäßen Standes der Technik entsprechend Fig. 5 läßt erkennen, daß das Umsetzen einer Materialstange relativ aufwendig ist. Vor allem ist es erforderlich, daß die gesamte Kranbrücke 9 mehrfach hin- und herverfahren wird. Dementsprechend muß bei diesem Stand der Technik jedesmal eine relativ große Masse beschleunigt und wieder abgebremst werden. Sowohl der Zeit- als auch Energieaufwand ist bei der bekannten Konstruktion relativ hoch.

Ergänzend zu dem beschriebenen Stand der Technik sei noch auf die Konstruktion nach der DE-PS 37 36 122 verwiesen, die ebenfalls ein Umsetzen von Stangenmaterial erlaubt, jedoch jeweils nur über den Rollgang selbst. Während des Umsetzens ist also der Rollgang blockiert. Dies ist sehr häufig nicht möglich und unerwünscht.

Der vorliegenden Erfindung liegt die Aufgabe zugrunde, ein gattungsgemäßes Regalbediengerät so weiterzubilden, daß für das Umsetzen von stabförmigem Material weniger Zeit und Energie benötigt wird.

Diese Aufgabe wird erfindungsgemäß durch die kennzeichnenden Merkmale des Anspruches 1 gelöst. Die erfindungsgemäße Konstruktion erlaubt ein Umsetzen von stabförmigem Material innerhalb der Kranbrücke, und zwar insbesondere auch bei Bewegung derselben in Lagerraumrichtung. Des weiteren muß nur die Trageinheit zum Umsetzen des stabförmigem Materials bewegt werden, d. h. im Vergleich zum Stand der Technik eine wesentlich geringere Masse. Mit der erfindungsgemäßen Konstruktion können also höchstrationell Materialstangen umgesetzt werden.

Sofern die sogenannte Losgröße gegen 1 geht, d. h. z. B. die Sägezeit einer dem Lager zugeordneten Sägemaschine kleiner ist als die Versorgungszeit des Regalbediengerätes für die Sägemaschine, ist es zweckmäßig, einen Zwischenspeicher als Kommissionspuffer vorzusehen, und zwar vorzugsweise mehr als einen Zwischenspeicher sowohl für die zu bearbeitenden Materialstangen als auch für bearbeitete Materialstangen, d. h. Reststäbe. In vorteilhafter Weise ist ein derartiger Kommissionspuffer ebenfalls in der Kranbrücke vorgesehen und mit dieser verfahrbar. Bezüglich dieser Ausführungsformen wird auf die Ansprüche 5 und 6 verwiesen. Mit dieser Ausgestaltung ist es z. B. möglich, einen Reststab in einem Regalfach des Lagers abzulegen, während ein Neustab bearbeitet wird, wobei die Ablage des Reststabes aus dem vorerwähnten Zwischenspeicher heraus erfolgt. Mit dem vorgesehenen Kommissionspuffer kann also bei kurzen Material-Bearbeitungszeiten, z. B. Sägezeiten, eine Wartezeit der Bearbeitungsmaschine bzw. Säge auf die Regalbediengerät-Versorgung entfallen, da die Trageinheit die Stäbe vom Kommissionspuffer im Regalbediengerät abholt bzw. dort wieder ablegt. Der Kommissionspuffer bzw. die dem Regalbediengerät zugeordneten Zwischenspeicher werden bei jeder Wartezeit des Regalbediengerätes aufgefüllt bzw. geleert.

Die dem Regalbediengerät immanente Kranbrücke kann entweder oberhalb des Lagers auf Schienen geführt sein, oder auf Schienen, die seitlich am Lager, insbesondere bodennah, angeordnet sind.

Die vertikal verfahrbare Trageinheit des erfindungsgemäßen Regalbediengerätes ist im Bereich der Regalgänge an vertikalen Stützen, vorzugsweise an den äußeren Stützen geführt. Genauso gut ist es natürlich denkbar, der vertikal verfahrbaren Trageinheit gesonderte Führungsschienen zuzuordnen, die seitlich am Regal bzw. an den stirnseitigen Enden eines jeden Regalgangs angeordnet sind. Für die Lösung der gestellten Aufgabe ist es auf jeden Fall wichtig, daß die der Trageinheit zugeordneten Tragmittel an der Kranbrücke auch noch horizontal in Lagerraumrichtung hin- und herverfahrbar sind, und zwar auch im Bereich innerhalb der Kranbrücke oberhalb des eigentlichen Lagers.

Die Grundidee des erfindungsgemäßen Regalbediengerätes kann somit wie folgt beschrieben werden:

Ein Regalbediengerät für stabförmiges Material weist eine auf Führungsschienen horizontal verfahrbaren Kranbrücke auf, die sowohl horizontal als auch vertikal in ihr verfahrbare Tragmittel für das stabförmige Material sowie einen Umsetzplatz umfaßt, so daß ein Umsetzen des Materials innerhalb der Kranbrücke auch bei Horizontalbewegung derselben möglich ist, wobei zusätzlich noch Zwischenspeicher als Kommissionspuffer zur rationellen Sortierung und Kommissionierung vorgesehen sein können.

Nachstehend werden Ausführungsformen eines erfindungsgemäß ausgebildeten Regalbediengerätes anhand der beigefügten Schemazeichnungen näher erläutert. Es zeigen:

- Fig. 1 die Stirnansicht eines erfindungsgemäß ausgebildeten Regalbediengerätes (Kranbrücke) in vereinfachter Darstellung;
- Fig. 2 eine Darstellung ähnlich der nach Fig. 1 mit einem Beispiel für das Umsetzen von stabförmigem Material innerhalb der Kranbrücke bzw. des Regalbediengerätes;

Fig. 3 die Stirnansicht einer zweiten Ausführungsform eines erfindungsgemäß ausgebildeten Regalbediengerätes mit Zwischenspeicher und in verkleinertem Maßstab;

Fig. 4 die Stirnansicht eines weiteren Ausführungsbeispieles eines erfindungsgemäß ausgebildeten Regalbediengerätes mit einem als Horizontalförderer ausgebildeten Zwischenspeicher, ebenfalls in verkleinertem Maßstab; und

Fig. 5 schematische Teil-Stirnansicht eines Regalbediengerätes nach dem gattungsgemäßen Stand der Technik.

Für Teile, die bereits anhand der Fig. 5 beschrieben worden sind, sind in den Fig. 1 bis 4 dieselben Bezugsziffern verwendet. Dementsprechend zeigt Fig. 1 ein Regalbediengerät nach Art eines Kranes für ein Lager für stabförmiges Material (7) wie Rohre oder Stangen mit quer zur Lagerraumrichtung (Doppelpfeil 12) angeordneten und in Lagerraumrichtung miteinander fluchtenden Stapelgestellen 1, 2, die regalartig bzw. unter Ausbildung von übereinander angeordneten Regalfächern 5, 6 mit nebeneinander liegenden Reihen übereineinander angeordneter, sich in Lagerraumrichtung erstreckender, an vertikalen Stützen 11 befestigter Tragarme 3 bzw. 4 für das stabförmige Material 7 (Materialstangen) versehen sind. Der Kran weist eine oberhalb der Stapelgestelle 1, 2 in Lagerraumrichtung horizontal verfahrbare, sich quer zur Lagerraumrichtung erstreckende Kranbrücke 9 auf, die eine im Bereich eines jeden Regalganges 16 vertikal auf- und abbewegbare Trageinheit 14 umfaßt. Die vorgenannte Vertikal-Bewegung der Trageinheit 14 ist in Fig. 1 mit dem Doppelpfeil 17 gekennzeichnet. An der Trageinheit 14 sind diametral gerichtete, jeweils auf die Stapelgestelle 1 bzw. 2 weisende Tragmittel 18, 19 in Form von sich etwa parallel zur Lagerraumrichtung erstreckenden Gabelzinken angeordnet. Innerhalb der über den Stapelgestellen 1, 2 auf horizontalen Schienen 8 hin- und herverfahrbaren Kranbrücke 9 ist noch ein Umsetzplatz 10 für die Materialstangen angeordnet, und zwar so, daß er für die diametral angeordneten Tragmittel 18, 19 der Trageinheit 14 von beiden Seiten her, d.h. in Fig. 1 sowohl von links als auch von rechts zugänglich ist. Der Umsetzplatz 10 ist so ausgebildet, daß eine darauf abgelegte Materialstange von den Tragmitteln 18 bzw. 19 der Trageinheit 14 unterfahren bzw. untergriffen werden kann zum Zwecke der Ablage auf dem Umsetzplatz bzw. zum Zwecke der Abnahme von diesem. Bei der Ausführungsform nach Fig. 1 ist der Umsetzplatz 10 innerhalb der Kranbrücke 9 stationär bzw. ortsfest angeordnet. Die Trageinheit 14 ist bei der dargestellten Ausführungsform ein nicht näher dargestellter Tragrahmen, der an den äußeren vertikalen Stützen 11 eines jeden Regalgangs 16 auf- und abverfahrbar ist (s. Führungsrollen 20 in Fig. 1). Die Kranbrücke 9 weist ebenfalls vertikale Schienenabschnitte 21 auf, die in Regalgang-Mittelposition der Kranbrücke 9, die in Fig. 1 mit der strichpunktierten Mittellinie 22 gekennzeichnet ist, mit den vertikalen Stützen 11 fluchten, so daß die Trageinheit 14 auch innerhalb der Kranbrücke 9 geführt vertikal auf- und abverfahrbar ist in Richtung des Doppelpfeiles 17.

Durch den Doppelpfeil 23 ist die Horizontal-Verfahrbarkeit der Tragmittel 18, 19 angedeutet. Die Tragmittel 18, 19 sind an der Unterseite eines am vertikal verfahrbaren Rahmen der Trageinheit 14 horizontal bzw. in Lagerraumrichtung hin- und herverfahrbaren Wagens 24 angeordnet.

Anhand der Fig. 2 soll nun das Umsetzen von stabförmigem Material 7, einer Materialstange, mittels der Konstruktion gemäß Fig. 1 beschrieben werden:

Zum Umsetzen einer in einem zum Regalgang 16 hin offenen Regalfach 5 gelagerten Materialstange wird die Kranbrücke 9 zunächst in Regalgang-Mittelposition 22 verfahren. Anschließend wird aus der Kranbrücke 9 heraus die Trageinheit 14 nach unten bewegt, und zwar so weit, daß die in Fig. 2 nach rechts weisenden Tragmittel 18 sich knapp unterhalb der umzusetzenden Materialstange befinden. Anschließend wird der Wagen 24 mit den Tragmitteln 18 am Rahmen der Trageinheit 14 nach rechts verfahren, und zwar so weit, bis die Tragmittel 18 die umzusetzende Materialstange untergreifen können. Diese Bewegung ist in Fig. 2 mit dem Pfeil 101 gekennzeichnet. Ausgehend von der zuletzt genannten und in Fig. 2 dargestellten Position der Tragmittel 18 wird die Trageinheit 14 etwas angehoben in Richtung des Pfeiles 102. Dann wird der Wagen 24 horizontal nach links in Richtung des Pfeiles 103 verfahren, so daß die Materialstange auf den Tragmitteln 18 in den Regalgang 16 gelangt. Der Wagen 24 wird dabei in Regalgang-Mittelposition gebracht. Nunmehr wird die Trageinheit 14 nach oben in Richtung des Pfeiles 104 in die Kranbrücke 9 gehoben. Innerhalb derselben wird der Wagen 24 in Richtung des Pfeiles 105 noch weiter nach links gefahren, und zwar vorzugsweise bis in die linke Endstellung, um dann an den vertikalen Schienenabschnitten 21 in Richtung des Pfeiles 106 hochgefahren zu werden unter entsprechender Mitnahme der Materialstange. Diese wird dabei an dem zentral innerhalb der Kranbrücke 9 angeordneten Umsetzplatz 10 vorbeigefahren. Auf einem Niveau oberhalb der Auflagefläche des Umsetzplatzes 10 wird der Wagen 24 samt Tragmittel 18 und Materialstange in Richtung des Pfeiles 107 nach rechts verfahren, und zwar so weit, bis die Materialstange sich über dem Umsetzplatz 10 befindet. Dann erfolgt eine Absenkung der Trageinheit 14 nach unten in Richtung des Pfeiles 108 unter Ablage der Materialstange auf dem Umsetzplatz 10. Die Tragmittel 18 werden daraufhin unter der abgelegten Materialstange nach links herausgefahren und unter dem Umsetzplatz 10 hindurch in Richtung der Pfeile 109 bis 115 in eine Position gebracht, in der die in Fig. 2 linken Tragmittel 19 sich unterhalb der auf dem Umsetzplatz 10 abgelegten Materialstange befinden. Daraufhin wird die Trageinheit 14 an den vertikalen Schienenabschnitten 21 etwas nach oben gefahren unter entsprechender Mitnahme der auf dem Umsetzplatz 10 abgelegten Materialstange. Diese Bewegung ist durch den Pfeil 116 angedeutet. Dann wird der Wagen 24 in Richtung des Pfeiles 117 bis in die in Fig. 2 rechte Endposition innerhalb der Kranbrücke 9 gebracht. In dieser Position wird die Trageinheit 14 samt Materialstange auf den Tragmitteln 19 in Richtung des Pfeiles 118 abgesenkt und zu einem in Fig. 2 nur von rechts her zugänglichen Regalfach oder einer in Fig. 2 nicht näher dargestellten Schnellwechselstation transportiert. Diese Transportbewegung ist in Fig. 2 mit dem Pfeil 119 angedeutet.

Die obige Beschreibung läßt erkennen, daß das eigentliche Umsetzen des stabförmigen Materials 7 innerhalb der Kranbrücke 9 erfolgt. Die Verfahrstrecken 105 bis 119 der Tragmittel 18, 19 befinden sich innerhalb der Kranbrücke 9. Dementsprechend kann das Umsetzen des stabförmigen Materials 7 auch während einer Horizontalbewegung der Kranbrücke 9 auf den Schienen 8 durchgeführt werden. Dies bedeutet eine erhöhte Effizienz (weniger Zeit und Energie) des Regalbediengerätes im Vergleich zum Stand der Technik. Die vorerwähnte Umsetzroutine wird insbesondere während eines Regalgang-Wechsels durchgeführt.

Die Ausführungsform nach Fig. 4 unterscheidet sich von der vorbeschriebenen Ausführungsform dadurch, daß der Umsetzplatz 10 zwei im Abstand übereinander angeordnete, in Lagerraumrichtung 12 jeweils gegenläufig bewegbare (Pfeile 25, 26) Horizontalförderer 27, 28, insbesondere Kettenförderer, umfaßt. Der Umsetzplatz 10 ist bei dieser Ausführungsform zugleich ein Kommissionspuffer. Der untere Horizontalförderer 28 wird z. B. als Einlager-Puffer verwendet, während der obere Horizontalförderer 27 als Auslager-Puffer dient. In beiden Fällen gilt das Kommissionierprinzip: first in/first out.

Die Bewegung der Trageinheit 14 sowie der dieser zugeordneten Tragmittel 18, 19 innerhalb der Kranbrücke 9 erfolgt analog dem anhand von Fig. 2 beschriebenen Bewegungsablauf.

Die Ausführungsform nach Fig. 3 ist dadurch gekennzeichnet, daß die Kranbrücke 9 zwei Paar jeweils übereinander angeordnete Regalfächer 29, 30 aufweist, wobei die beiden Paare von Regalfächern einander gegenüberliegend angeordnet sind in vertikaler Fortsetzung der Regalfächer 5 bzw. 6 der Stapelgestelle 1, 2 bei Regalgang-Mittelposition der Kranbrücke 9. Die zusätzlichen Regalfächer 29, 30 dienen als Zwischenspeicher bzw. Kommissionspuffer. Vorzugsweise werden die jeweils unteren Regalfächer 29, 30 als Einlager-Puffer verwendet, während die jeweils oberen Regalfächer 29, 30 als Auslager-Puffer dienen. Unter Verwendung der genannten Puffer wird das Anfahren einer Ein-/Auslagerstation bei jeder Materialstange vermieden. Die Station wird erst angefahren, wenn der beschriebene Kommissionspuffer gefüllt ist. Des weiteren wird der Kommissionspuffer vorzugsweise erst dann wieder belegt, wenn er leer ist, um die Kommissionierreihenfolge nicht durcheinander zu bringen. Im Bereich zwischen den einander zugewandten Regalfächern 29, 30 ist ein Umsetzplatz 10 entsprechend den Fig. 1 und 2 angeordnet. Der Umsetzplatz 10 befindet sich vorzugsweise oberhalb der Regalfächer 29 bzw. 30, d. h. in Regalkopfebene, so daß der Kommissionspuffer unabhängig vom Umsetzen einer Materialstange benutzbar ist.

Vorzugsweise werden die Regalfächer 29, 30 nach dem Kommissionierprinzip: first in/first out verwaltet.

Falls nur ein Regalfach für nur eine Materialstange vorgesehen ist, entfällt das vorerwähnte Kommissionierverfahren.

Selbstverständlich können innerhalb der Kranbrücke 9 auch zwischen den gegenüberliegend angeordneten Regalfächern 29 und 30 Materialstangen umgesetzt werden, insbesondere auch während eines Regalgang-Wechsels der Kranbrücke 9.

Sofern die sogenannte Losgröße gegen 1 geht, d. h. sofern die Material-Bearbeitungszeit kleiner ist als die Versorgungszeit des Regalbediengerätes, ist es zweckmäßig, in der Kranbrücke 9 mehr als einen Zwischenspeicher für stabförmiges Material (Rest- und/oder Neustäbe) zu haben. Nur dann können Bearbeitungs-Leerzeiten auf ein Minimum reduziert werden. Dementsprechend begrenzt ist der Wirkungsgrad der Konstruktion nach der DE-PS 37 36 122, die nur einen einzigen Speicherplatz für stabförmiges Material aufweist. Des weiteren ist diese bekannte Konstruktion, wie bereits eingangs dargelegt, zum Umsetzen von stabförmigem Material ungeeignet, da ein Umsetzen nur über den Rollgang möglich ist.

Zum Kommissionspuffer sei noch grundsätzlich bemerkt: Bei Berabeitungs- z. B. Säge-(Kommissionier)-Auftragsgrößen < X sollte der Kommissionspuffer vor Arbeitsbeginn bzw. während Arbeitspausen der Bearbeitungsmaschine gefüllt werden. Bei Bearbeitungs-z. B. Säge-Auftragsgrößen > X kann die Bearbeitunszeit zum Füllen des Kommissionspuffers ausgenutzt werden ("x" = Anlagenrundlauf;

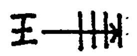

Bearbeitungs-, z. B. Sägezeit = Regalbediengerät-Laufzeit).

Die vorerwähnte Trageinheit kann - und zwar auch unabhängig von den vorbeschriebenen Konstruktionsmerkmalen - von Hubscheren gehalten und vertikal geführt sein.

Bei den dargestellten Ausführungsformen erfolgt die Absenkung der Trageinheit aufgrund ihres Eigengewichts, während das Hochfahren mittels Hubseilen durchgeführt wird, die mit entsprechenden Antriebsmotoren in der Kranbrücke 9 gekoppelt sind. Da es sich diesbezüglich um eine an sich bekannte Konstruktion handelt, wurde auf eine nähere Beschreibung verzichtet.

Die vertikalen Stützen 11, insbesondere die jeweils äußeren Stützen einer jeden Lagerzeile bzw. eines jeden Regalgangs 16 sind entweder U- oder Doppel-T-Profile, an deren Schenkeln die Laufrollen 20 der Trageinheit abrollen, so wie dies in den Fig. 1 bis 4 schematisch dargestellt ist. Dort rollen die Laufrollen 20 an sich quer zur Lagerraumrichtung erstreckenden Schenkeln der vertikalen Stützen 11 ab.

**Patentansprüche**

1. Regalbediengerät nach Art eines Kranes für ein Lager für stabförmiges Material (7) wie Rohre oder Stangen bzw. solches Material enthaltende Langgutkassetten mit quer zur Lagerraumrichtung (12) angeordneten und in Lagerraumrichtung miteinander fluchtenden Stapelgestellen (1, 2), die regalartig bzw. unter Ausbildung von übereinander angeordneten Regalfächern (5, 6) mit nebeneinander liegenden Reihen übereinander angeordneter, sich in Lagerraumrichtung erstreckender, an vertikalen Stützen (11) befestigter Tragarme (3, 4) für das stabförmige Material (7) wie Rohre oder Stangen versehen sind, wobei der Kran eine oberhalb der Stapelgestelle (1, 2) in Lagerraumrichtung (12) horizontal verfahrbare, sich quer zu Lagerraumrichtung erstreckende Kranbrücke (9) aufweist, die eine im Bereich eines jeden Regalganges (16) vertikal auf- und abbewegbare Trageinheit (14) umfaßt, an der diametral gerichtete, jeweils auf die Stapelgestelle (1, 2) weisende Tragmittel (18, 19) angeordnet sind, und mit einem Umsetzplatz (10) für das stabförmige Material (7) wie Rohre oder Stangen, der für die diametral gerichteten Tragmittel (18, 19) von beiden Seiten her zugänglich ist,
   **dadurch gekennzeichnet, daß**
   der Umsetzplatz (10) für das stabförmige Material (7) wie Rohre oder Stangen als Teil der Kranbrücke (9) mit dieser hin- und herverfahrbar ist, und daß die Tragmittel (18, 19) an der Kranbrücke (9) relativ zu dieser in Lagerraumrichtung hin- und herverfahrbar gelagert sind. (Doppelpfeil 23).

2. Regalbediengerät nach Anspruch 1,
   **dadurch gekennzeichnet, daß**
   der Umsetzplatz (10) innerhalb der Kranbrücke (9) stationär ausgebildet ist.

3. Regalbediengerät nach Anspruch 1,
   **dadurch gekennzeichnet, daß**
   der Umsetzplatz (10) mindestens einen in Lagerraumrichtung (12) bewegbaren Horizontalförderer umfaßt.

4. Regalbediengerät nach Anspruch 3,
   **dadurch gekennzeichnet, daß**
   der Umsetzplatz (10) Zwei im Abstand übereinander angeordnete, in Lagerraumrichtung (12) jeweils gegenläufig bewegbare (Pfeile 25, 26) Horizontalförderer (27, 28), insbesondere Kettenförderer, umfaßt.

5. Regalbediengerät, nach einem der Ansprüche 1 bis 4,
   **dadurch gekennzeichnet, daß**
   die Kranbrücke (9) mindestens ein Regalfach als Zwischenspeicher aufweist, insbesondere in vertikaler Fortsetzung der Regalfächer (3 bzw. 4) eines jeden Stapelgestells (1 bzw. 2) bei Regalgang-Mittelposition (22) der Kranbrücke (9).

6. Regalbediengerät nach Anspruch 5,
   **dadurch gekennzeichnet, daß**
   die Kranbrücke (9) mindestens zwei Paar jeweils übereinander angeordneter Regalfächer (29, 30) aufweist, wobei die beiden Paare von Regalfächern einander gegenüberliegend angeordnet sind, insbesondere in vertikaler Fortsetzung der gegenüberliegend angeordneten Regalfächer (5, 6) eines Regalgangs (16) bei Regalgang-Mittelposition (22) der Kranbrücke (9).

7. Regalbediengerät nach einem der Ansprüche 1 bis 6,
   **dadurch gekennzeichnet, daß**
   die Trageinheit (14) an den vertikalen Stützen (11) der Stapelgestelle (1, 2), insbesondere an den äußeren Stützen eines jeden Regalgangs (16) geführt auf- und abverfahrbar ist; und daß die Kranbrücke (9) ebenfalls vertikale Schienenabschnitte (21) aufweist, die in Regalgang-Mittelposition (29) der Kranbrücke (9) mit den vertikalen Stützen (11) eines jeden Regalgangs (16) fluchten, so daß die Trageinheit (14) auch an bzw. innerhalb der Kranbrücke (9) geführt vertikal auf- und abverfahrbar ist unter Fortsetzung der Vertikalbewegung innerhalb eines Regalganges (16).

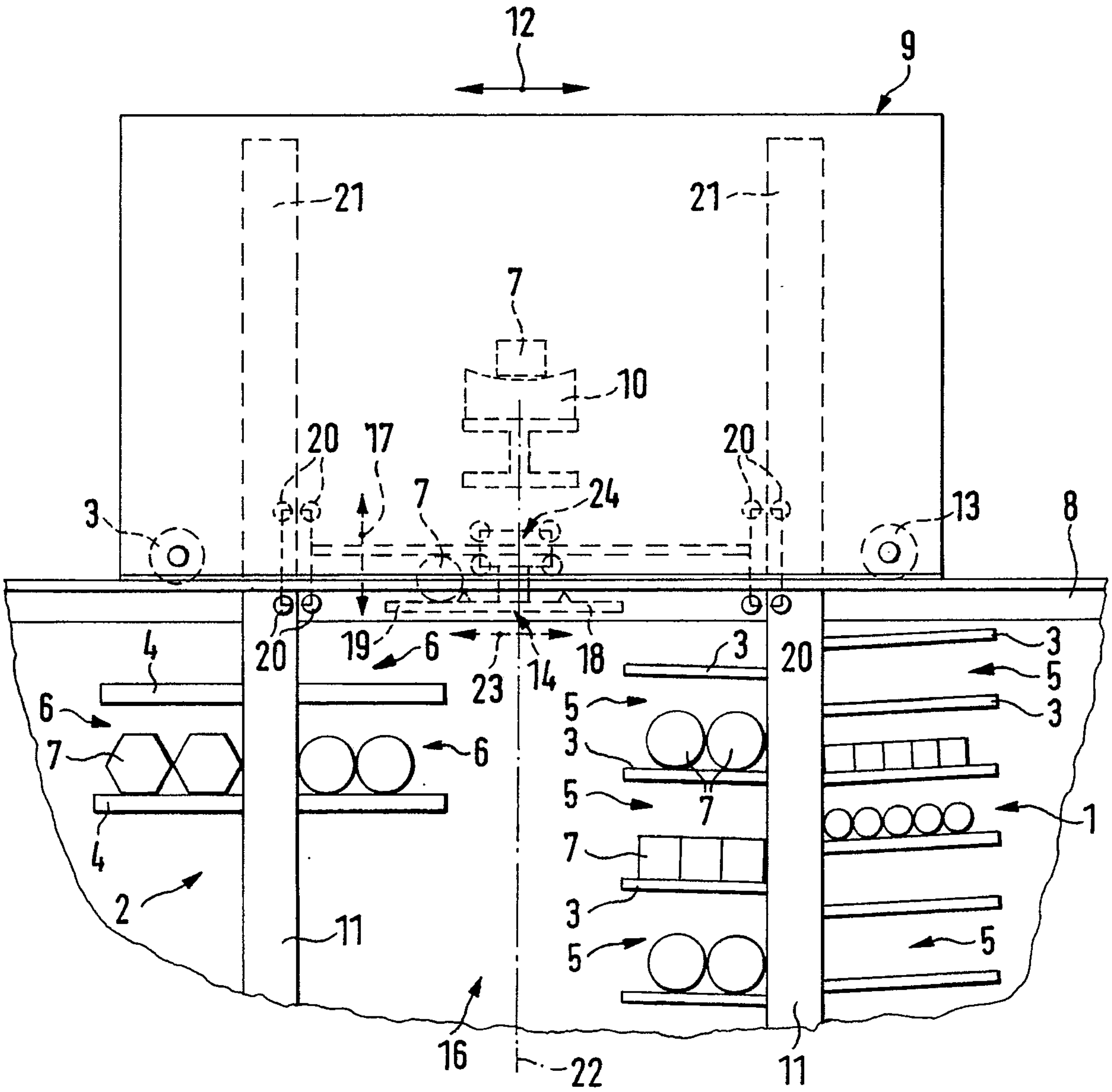
12
9
21
21
7
10
20
17
20
3
7
24
13
8
20
19
6
18
20
23
14
3
20
4
3
5
6
5
3
7
6
3
5
7
4
7
1
7
2
3
11
5
5
16
22
11

FIG.1

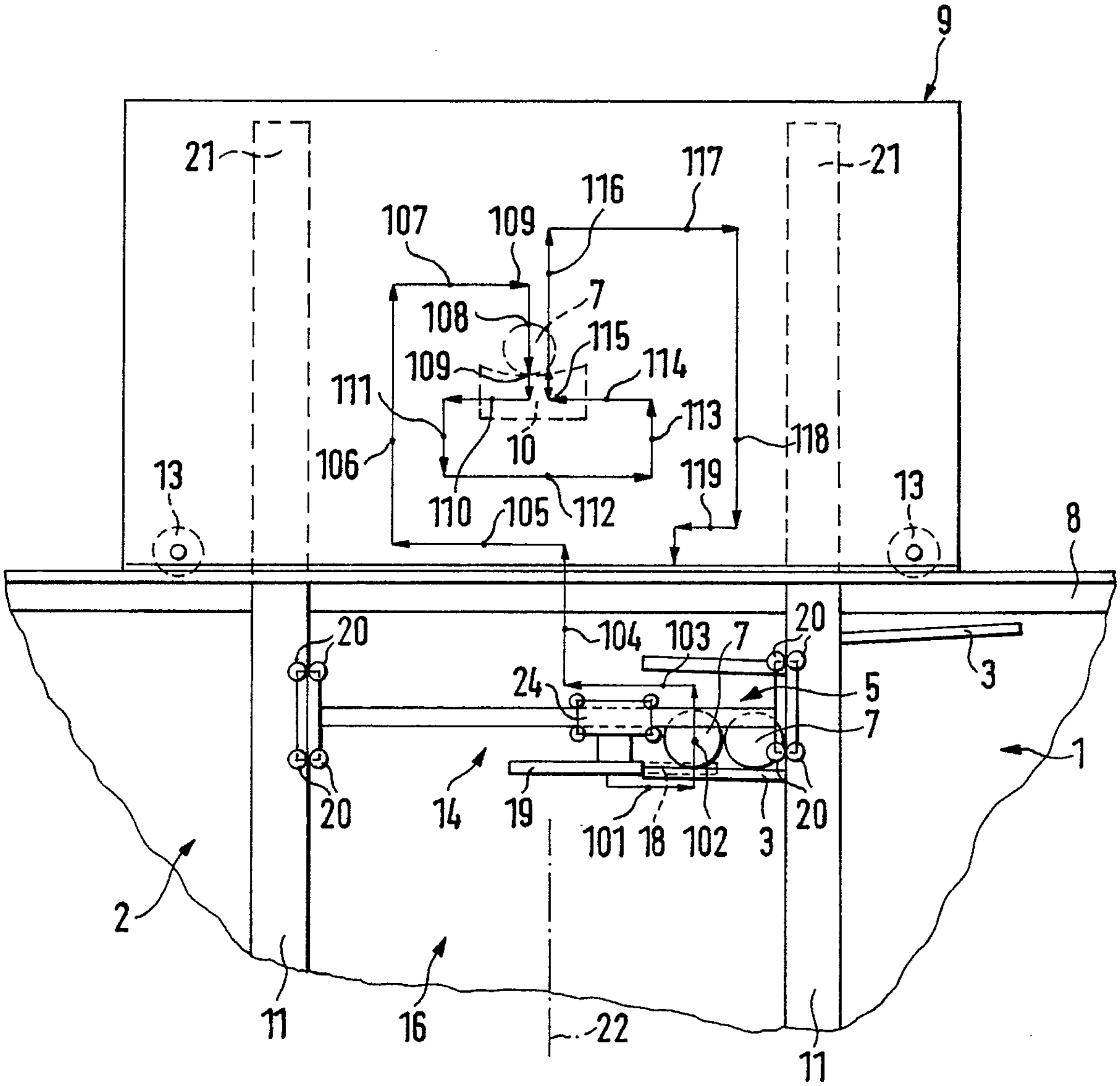
9
21
21
107
109
116
117
108
7
109
115
114
111
113
106
10
118
13
110
105
112
119
13
8
104
103
7
20
20
24
5
3
7
1
20
14
19
101
18
102
3
20
2
11
16
22
11

FIG. 2

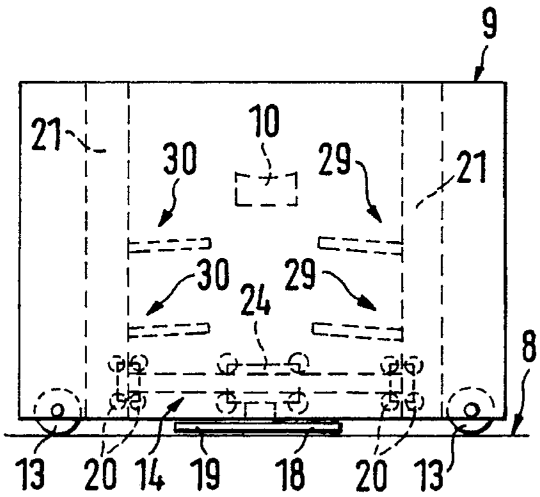


FIG.3

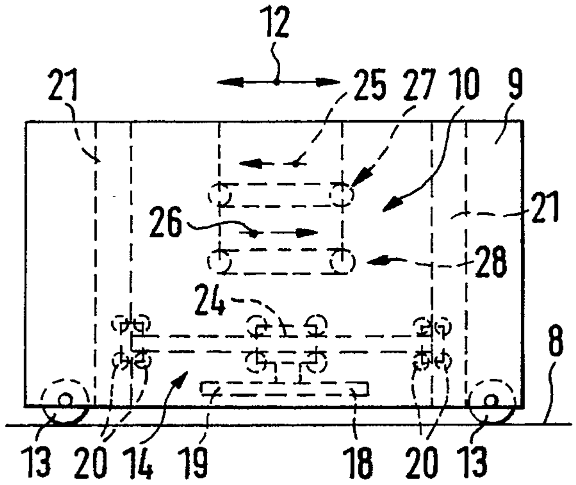


FIG.4

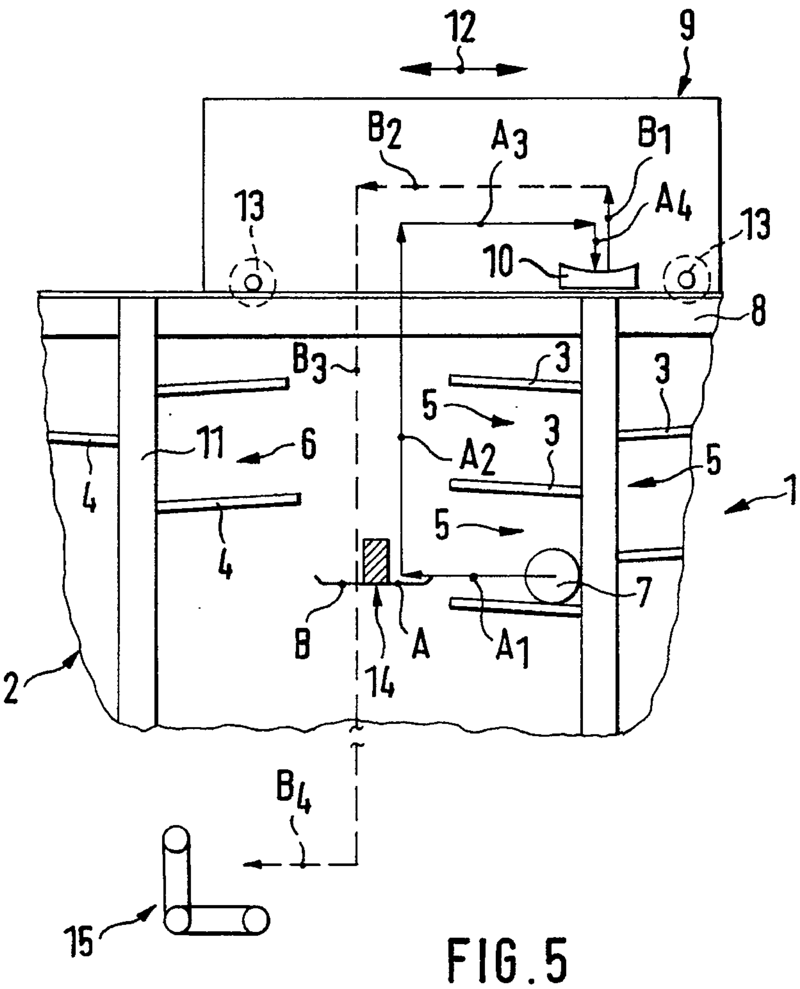


FIG.5

Europäisches Patentamt

# EUROPÄISCHER RECHERCHENBERICHT

Nummer der Anmeldung

EP 91105083.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| A | US - A - 4 005 786 (ADELSON et al.) * Fig. 1 * -- | 1 | B 66 F 9/07<br>B 65 G 1/04 |
| A | DE - A1 - 3 326 200 (FRIEDRICH REMMERT GMBH) * Fig. 1-5 * ---- | 1 | |

RECHERCHIERTE SACHGEBIETE (Int. Cl.5)

B 65 G
B 66 F

Der vorliegende Recherchenbericht wurde für alle Patentansprüche erstellt.

| Recherchenort | Abschlußdatum der Recherche | Prüfer |
|---|---|---|
| WIEN | 16-05-1991 | PISSENBERGER |

KATEGORIE DER GENANNTEN DOKUMENTEN

X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veroffentlicht worden ist
D : in der Anmeldung angeführtes Dokument
L : aus andern Gründen angeführtes Dokument

& : Mitglied der gleichen Patentfamilie, übereinstimmendes Dokument